# EUROPÄISCHE PATENTSCHRIFT

(11) **EP 0 603 124 B1**
(45) Veröffentlichungstag und Bekanntmachung des Hinweises auf die Patenterteilung: **31.01.1996**
(21) Anmeldenummer: 93810846.1
(22) Anmeldetag: 01.12.1993
(51) Int. Cl.: F16L 3/14

(54) **Rohrabhängung**
Pipe hanger
Suspension pour tuyaux

(30) Priorität: 17.12.1992 DE 4242628
(43) Veröffentlichungstag der Anmeldung: 22.06.1994
(73) Patentinhaber: HILTI Aktiengesellschaft, FL-9494 Schaan (LI)
(72) Erfinder: Höfle, Siegfried, Dipl.-Ing., A-6840 Götzis (AT)
(74) Vertreter: Wildi, Roland

(56) Entgegenhaltungen:
- EP-A- 0 504 097
- DE-A- 2 309 664
- US-A- 4 795 115
- US-A- 4 809 601

## Beschreibung

Die Erfindung betrifft eine Rohrabhängung nach dem Oberbegriff des Anspruchs 1 gemäß DE-A- 2 309 664.

Für die Anordnung von Rohren an Wänden oder Decken sind Rohrabhängungen bekannt. Die DE-A-2 309 664 zeigt beispielsweise eine solche Rohrabhängung, die aus einer Halteschlaufe in Form eines Metallbandes besteht, dessen Enden abgewinkelte, über eine Verrastung zusammenwirkende, übereinanderliegende Flansche aufweist. Ein erster Flansch besitzt zusätzlich eine Durchgangsbohrung und ein zweiter Flansch ist mit einer zum freien Ende hin offenen Ausnehmung versehen.

Abgehängte Rohre erzeugen mit ihrem Eigengewicht und mit dem Gewicht des durchströmenden Mediums Zugkräfte in der Halteschlaufe. Diese Zugkräfte sind bestrebt, die übereinanderliegend angeordneten Flansche auseinanderzuziehen. Um dies zu verhindern, weist der Flanschbereich einen Klemmbereich und einen Rastmittelbereich auf. Da die Flänsche gegenüber der Halteschlaufe abgewinkelt sind, ergibt sich eine ungünstige Übertragung der Zugkräfte von der Halteschlaufe auf die abgewinkelten Flansche.

Beim Auftreten hoher Zugkräfte im Bereich der Halteschlaufen kann eine Verformung im abgewinkeiten Bereich, insbesondere im Bereich des zweiten Flansches, entstehen. Daraus ergibt sich ein axialer Versatz zwischen dem ersten und dem zweiten Flansch im Bereich der ineinandergreifenden Verrastung, so dass die gesamten auftretenden Zugkräfte nicht gleichzeitig vom Klemmbereich und von der Verrastung aufgenommen werden, sondern zuerst alleine vom Klemmbereich.

Dies kann wiederum eine Verformung bzw. eine Deformation im Bereich der Verrastung zur Folge haben, so dass die Verrastung nicht mehr in der Lage ist, auftretende Zugkräfte aufzunehmen. Durch eine Verschiebung der Flansche im Klemmbereich kann eine Lockerung im besagten Klemmbereich entstehen, so dass schlussendlich die weiterhin vorhandenen Zugkräfte von der Verrastung aufgenommen werden müssen.

Der Erfindung liegt die Aufgabe zugrunde, eine einfach aufgebaute Rohrabhängung zu schaffen. die in der Lage ist, hohe Zugkräfte aufzunehmen.

Erfindungsgemäss wird dies durch die Merkmale des Anspruchs 1 erreicht.

Die zusätzlichen Rastmittel dienen der Aufnahme der auftretenden Zugkräfte. Eine gegenseitige Verschiebung zwischen den beiden übereinanderliegenden Flanschen wird durch die Verrastung im Bereich der abgewinkelten Flansche verhindert. Es kann somit keine Verformung im Bereich der abgewinkelten Flansche auftreten.

Derartig ausgebildete Rohrabhängungen eignen sich besonders für die Installation von Sprinkleranlagen, da im Brandfall herabfallende Teile auf die befestigten Rohre fallen und dadurch im Bereich der Rohrabhängungen sehr hohe Zugkräfte erzeugen. Diese Zugkräfte sind mit den erfindungsgemässen Rohrabhängungen aufnehmbar.

Die Rastmittel sind vorzugsweise von einer Anschlagkante und einem Vorsprung gebildet. Die Anschlagkante kann beispielsweise die Wandung einer Durchtrittsöffnung sein, an der ein in die Durchtrittsöffnung ragender Vorsprung in Form eines freigestanzten, abragenden Teiles der Halteschlaufe anliegt. Die Anschlagkante kann auch als abgewinkeltes Ende und der Vorsprung als das abgewinkelte Ende aufnehmender Falt ausgebildet sein.

Zweckmässigerweise ist die Anschlagkante an der Verlängerung des ersten Flansches und der Vorsprung am entsprechenden Bereich des zweiten Flansches angeordnet. Aus produktions- und handhabungstechnischen Gründen ragt der Vorsprung vom entsprechenden Bereich der Halteschlaufen zum Innem der Halteschlaufe in einen ebenfalls zum Innem der Halteschlaufe hin freigestanzten Bereich der Verlängerung. Der freigestanzte Bereich der Verlängerung bildet eine Anschlagkante, die mit dem Vorsprung zusammenwirkt. Dabei sind die Anschlagkante und der Vorsprung im flanschnahen Bereich der Halteschlaufe angeordnet.

Zweckmässigerweise erstrecken sich die Anschlagkante und der Vorsprung über 20% bis 70% der Breite der Halteschlaufe. Die Breite, über welche sich die Anschlagkante und der Vorsprung über die Halteschlaufe erstrecken, ist abhängig von den auftretenden Zugkräften im Bereich der Halteschlaufe. Ebenfalls abhängig ist die Breite von der Art der Ausbildung der Anschlagkante und des Vorsprunges. So können sich beispielsweise massiv ausgebildete Vorsprünge und Anschlagkanten weniger breit über die Halteschlaufe erstrecken als Anschlagkanten und Vorsprünge, die weniger massiv ausgebildet sind.

Die Erfindung wird nachstehend anhand zweier Zeichnungen, die ein Ausführungsbeispiel zeigen, näher erläutert. Es zeigen:
- Fig. 1: eine erfindungsgemässe Rohrabhängung mit Gewindestange und Anschlägen ohne Rohrleitung
- Fig. 2: eine Draufsicht auf die Rohrabhängung gemäss Fig. 1, ohne Gewindestange und ohne Anschläge

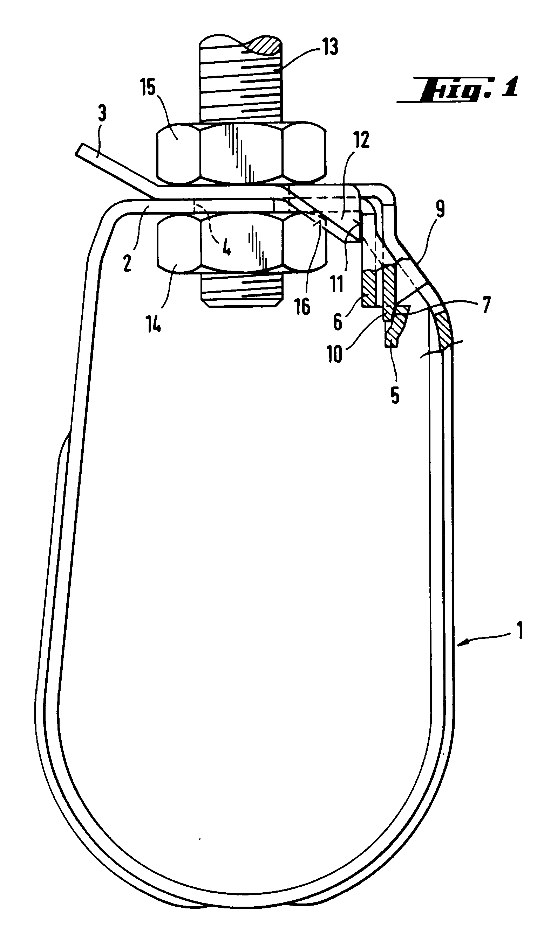

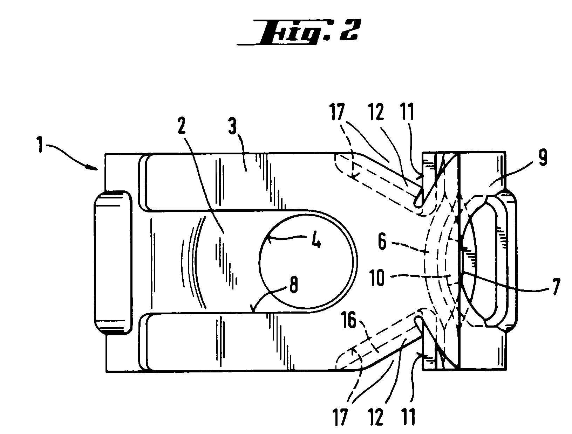

Die in den Fig. 1 und 2 dargestellte Rohrabhängung besteht aus einer bandförmigen Halteschlaufe 1, deren Enden als abgewinkelte Flansche 2, 3 ausgebildet sind.

Ein erster Flansch 2 dieser Halteschlaufe 1 weist eine Durchgangsbohrung 4 und eine sich an den Flansch 2 anschliessende Verlängerung 5 auf, die eine zum Innem der Halteschlaufe 1 erstreckende Freistanzung 6 aufweist. Der zum freien Ende des ersten Flansches 2 weisende Mündungsbereich dieser Freistanzung 6 bildet eine Anschlagkante 7.

Ein zweiter Flansch 3 der Halteschlaufe 1 ist ebenfalls abgewinkelt und weist eine zum freien Ende hin offene Ausnehmung 8 auf. Die Breite der offenen Ausnehmung 8 sowie der Durchmesser der Durchgangsbohrung 4 im ersten Flansch 2 sind im wesentlichen gleich. Die Halteschlaufe 1 trägt in einem entsprechenden Bereich 9 einen zum Innem der Halteschlaufe 1 ragenden, freigestanzten Vorsprung 10, der mit der im Bereich der Verlängerung 5 angeordneten Anschlagkante 7 bei der Festlegung bzw. bei der Befestigung eines Rohres zusammenwirkt. Die an der Halteschlaufe 1 auftretenden Zugkräfte werden zur Gänze von dem Vorsprung 10 und der Anschlagkante 7 aufgenommen.

Die beiden übereinanderliegenden Flansche 2, 3 sind mit einer weiteren Verrastung versehen, dle aus einer Anschlagkante 11 am ersten Flansch 2 und einem Vorsprung 12 am zweiten Flansch 3 besteht.

Der Vorsprung 12 weist eine in Richtung zum freien Ende des Flansches 3 hin verlaufende Einführschräge 16 auf, die beim Schliessen der Halteschlaufe 1 Im äusseren Bereich des Flansches 2 aufläuft und ein kurzes Auseinanderbewegen beider, im wesentlichen übereinanderliegenden Flansche 2, 3 bewirkt. Der Vorsprung 12 greift anschliessend in eine entsprechende Ausnehmung 17 im Flansch 2 und legt sich an der Anschlagkante 7 an. Dabei gelangen auch beide übereinanderliegenden Flansche 2, 3 wieder in gegenseitigen Kontakt.

Durch die zum freien Ende des zweiten Flansches 3 hin offene Ausnehmung 8 und durch die Durchgangsbohrung 4 im ersten Flansch 2 ist eine Gewindestange 13 axial versetzbar. Der Gewindeaussendurchmesser dieser Gewindestange 13 ist dabei kleiner ausgebildet als der Durchmesser der Durchgangsbohrung 4 und die Breite der zum freien Ende hin offenen Ausnehmung 8. Die beiden übereinanderliegenden Flansche 2, 3 können mittels zweier verstellbarer Anschläge in Form von Muttem 14, 15 gegeneinander verspannt werden. Die Muttem 14, 15 sitzen dabei auf der Gewindestange 13, wobei sich eine Mutter 15 ausserhalb der Halteschlaufe 1 und die andere Mutter 14 innerhalb der Halteschlaufe 1 befindet.

## Patentansprüche

1. Rohrabhängung mit einer, zwei Anschläge tragenden Gewindestange (13) und einer bandförmigen Halteschlaufe (1), deren Enden abgewinkelte, über eine Verrastung zusammenwirkende, ûbereinanderliegende Flansche (2, 3) aufweisen, die von den Anschlägen gegeneinander verspannbar sind, wobei ein erster Flansch (2) eine Durchgangsbohrung (4) für die Gewindestange (13) und ein zweiter Flansch (3) eine zum freien Ende hin offene Ausnehmung (8) für die Gewindestange (13) aufweist, **dadurch gekennzeichnet**, dass sich an den ersten abgewinkelten Flansch (2) eine parallel zum entsprechenden nicht abgewinkelten Bereich (9) der Halteschlaufe (1) verlaufende Verlängerung (5) anschliesst und am entsprechenden Bereich (9) sowie an der Verlängerung (5) miteinander zusammenwirkende Rastmittel angeordnet sind.

2. Rohrabhängung nach Anspruch 1, dadurch gekennzeichnet, dass die Rastmittel von einer Anschlagkante (7) und einem Vorsprung (10) gebildet sind.

3. Rohrabhängung nach Anspruch 2, dadurch gekennzeichnet, dass die Anschlagkante (7) an der Verlängerung (5) des ersten Flansches (2) und der Vorsprung (10) an entsprechenden Bereich (9) des zweiten Flansches (3) angeordnet ist.

4. Rohrabhängung nach einem der Ansprüche 2 oder 3, dadurch gekennzeichnet, dass sich die Anschlagkante (7) und der Vorsprung (10) über 20 % bis 70 % der Breite der Halteschlaufe (1) bzw. der Verlängerung (5) erstrecken.

## Claims

1. Pipe hanger having a threaded rod (13) carrying two stops and a strip-shaped holding loop (1), the ends of which have angled flanges (2, 3) which interact via a catch, lie one above the other and can be restrained against one another by the stops, a first flange (2) having a through-hole (4) for the threaded rod (13) and a second flange (3) having a recess (8), open towards the free end, for the threaded rod (13), characterized in that an extension (5) adjoins the first angled flange (2), which extension (5) runs parallel to the corresponding area (9), which is not angled, of the holding loop (1), and interacting catch means are arranged on the corresponding area (9) as well as on the extension (5).

2. Pipe hanger according to Claim 1 characterized in that the catch means are formed by a stop edge (7) and a projection (10).

3. Pipe hanger according to Claim 2, characterized in that the stop edge (7) is arranged on the extension (5) of the first flange (2) and the projection (10) is arranged on the corresponding area (9) of the second flange (3).

4. Pipe hanger according to either of Claims 2 or 3, characterized in that the stop edge (7) and the projection (10) extend over 20% to 70% of the width of the holding loop (1) and the extension (5) respectively.

## Revendications

1. Suspension pour tuyaux, comprenant une tige filetée (13) avec deux butées, et une boucle de retenue (1) en forme de ruban dont les extrémité comportent des portées coudées en appui l'une sur l'autre (2,3) qui coopèrent par encliquetage et peuvent être bloquées l'une contre l'autre par les butées, une première portée (2) présentant une ouverture de passage (4) pour la tige filetée (13) et une seconde portée (3) présentant un évidement (8) pour la tige filetée (13) ouvert en direction de l'extrémité libre, caractérisée en ce qu'à la première portée (2) coudée fait suite un prolongement (5) orienté parallèlement à la section (9) correspondante, non coudée de la boucle de retenue (1), et que des moyens d'encliquetage coopérant l'un avec l'autre sont disposés sur la section (9) correspondante ainsi que sur le prolongement (5).

2. Suspension pour tuyaux selon la revendication 1, caractérisée en ce que les moyens d'encliquetage sont constitués par un bord d'arrêt (7) et par une saillie (10).

3. Suspension pour tuyaux selon la revendication 2, caractérisée en ce que le bord d'arrêt (7) est réalisé sur le prolongement (5) de la première portée (2) et que la saillie (10) est réalisée sur la section (9) correspondante de la seconde portée (3).

4. Suspension pour tuyaux selon l'une des revendications 2 ou 3, caractérisée en ce que le bord d'arrêt (7) et la saillie (10) s'étendent sur 20 % à 70 % de la largeur de la boucle de retenue (1) et respectivement du prolongement (5).
